(19) **Europäisches Patentamt / European Patent Office / Office européen des brevets**

(11) **EP 3 435 404 B1**

(12) **EUROPEAN PATENT SPECIFICATION**

(45) Date of publication and mention of the grant of the patent:
**22.04.2020 Bulletin 2020/17**

(51) Int Cl.:
***H01J 49/00*** *(2006.01)*     ***H01J 49/06*** *(2006.01)*

(21) Application number: **18186077.6**

(22) Date of filing: **27.07.2018**

(54) **TUNING MULTIPOLE RF AMPLITUDE FOR IONS NOT PRESENT IN CALIBRANT**

ABSTIMMUNG EINER MEHRPOLIGEN HF-AMPLITUDE FÜR IONEN, DIE NICHT IN EINER KALIBRIERSUBSTANZ PRÄSENT SIND

ACCORD D'AMPLITUDE RF MULTIPOLAIRE POUR DES IONS NON PRÉSENTS DANS UNE SUBSTANCE D'ÉTALONNAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2017 US 201715662811**

(43) Date of publication of application:
**30.01.2019 Bulletin 2019/05**

(73) Proprietor: **Thermo Finnigan LLC**
**San Jose, CA 95134 (US)**

(72) Inventors:
- **QUARMBY, Scott T.**
**San Jose, CA California 95134 (US)**
- **MAZE, Joshua T.**
**San Jose, CA California 95134 (US)**
- **SANDERS, Nathaniel L.**
**San Jose, CA California 95134 (US)**

(74) Representative: **Boult Wade Tennant LLP**
**Salisbury Square House**
**8 Salisbury Square**
**London EC4Y 8AP (GB)**

(56) References cited:
**JP-A- H10 112 282**     **JP-B2- 3 279 045**
**US-A1- 2010 301 210**     **US-A1- 2016 284 527**

**Description**

**FIELD**

The present disclosure generally relates to the field of mass spectrometry including tuning multipole RF amplitude for ions not present in calibrant.

**INTRODUCTION**

Mass spectrometry can be used to perform detailed analyses on samples. Furthermore, mass spectrometry can provide both qualitative (is compound X present in the sample) and quantitative (how much of compound X is present in the sample) data for a large number of compounds in a sample. These capabilities have been used for a wide variety of analyses, such as to test for drug use, determine pesticide residues in food, monitor water quality, and the like.

Instrument to instrument variations limits the ability to have a uniform set of parameters that can be used across multiple instruments of the same type. This can be compensated for by running calibration routines for each instrument, but the number of components that need tuning can result in a time consuming calibration routine. Calibration is generally accomplished with the use of a calibration mixture that produces multiple ionic species of known m/z. However, the choice of ions suitable for use in a calibration mixture may be limited. This can be problematic in situations where it is necessary to tune at m/z's outside the range of the calibrant. From the foregoing it will be appreciated that a need exists for improved methods of tuning multipole RF amplitude for ions not present in calibrant.

JP-H10-112282-A discloses a technique for correcting the drift of the mass number of ions due to heating of a ceramic holder of a quadrupole. The relationship between the power fed to the quadrupole and the temperature of the ceramic holder is measured. This is used to correct the voltage applied to the rod electrodes of the quadrupole, so as to resolve mass number drift.

US-A-2016/284527 describes a method which includes producing ions from one or more calibrant species and delivering the ions to a mass analyzer, and measuring a first set of mass related physical values for the ions from the one or more calibrant species. The method further includes producing ions from a sample and delivering the ions to a mass analyzer, and measuring a second mass related physical value for a first sample ion species. The first sample ion species has a mass-to-charge ratio outside of the range of the mass-to-charge ratios of the calibrant ion species. Additionally, the method includes calculating a calibration curve based on the first set of mass related physical values and second mass related physical value, and modifying at least one instrument parameter based on the calibration curve.

**SUMMARY**

The invention is defined in a first aspect, by a mass spectrometry apparatus as set out in claim 1.

In various embodiments of the first aspect, the ion guide can be a quadrupole, a square quadrupole, a hexapole, an octopole, a stacked ring ion guide, an ion funnel, an ion carpet, or any combination thereof.

In particular embodiments, the mass spectrometry controller can be configured to calculate the effective r0 according to

$$r0_{effective} = \sqrt{cutoff_{observed} * r0_{nominal}^{2}/cutoff_{expected}} \cdot$$

In various embodiments of the first aspect, the observed low mass cutoff can be an average across at least two calibrant ion species.

In various embodiments of the first aspect, the RF voltage can be determined based on the effective r0, the frequency of the RF voltage, and a tune table.

In particular embodiments, the tune table can include optimum q values for mass-to-charge ratios.

In a second aspect, a method of analyzing ion fragments is defined in claim 7.

In various embodiments of the second aspect, the ion guide can be a quadrupole, a square quadrupole, a hexapole, an octopole, a stacked ring ion guide, an ion funnel, an ion carpet, or any combination thereof.

In particular embodiments, calculating the effective r0 can be in accordance

$$\text{with } r0_{effective} = \sqrt{cutoff_{observed} * r0_{nominal}^{2}/cutoff_{expected}}.$$

In various embodiments of the second aspect, the observed low mass cutoff can be an average across at least two calibrant ion species.

In various embodiments of the second aspect, the RF voltage can be determined based on the effective r0, an RF frequency, and a tune table. In particular embodiments, the tune table includes optimum q values for mass-to-charge ratios.

**DRAWINGS**

For a more complete understanding of the principles disclosed herein, and the advantages thereof, reference is now made to the following descriptions taken in conjunction with the accompanying drawings and exhibits, in which:

Figure 1 is a block diagram of an exemplary mass spectrometry system, in accordance with various embodiments.

Figures 2 is a diagram illustrating the optimum q as a function of m/z, in accordance with various embodiments.

Figures 3 is a flow diagram illustrating an exemplary method of an RF amplitude of a multipole ion guide, in accordance with various embodiments.

Figure 4 is a block diagram illustrating an exemplary computer system.

Figure 5 is a graph illustrating a tune curve using a nominal r0, in accordance with various embodiments.

Figure 6 is a graph illustrating a tune curve using an effective r0, in accordance with various embodiments.

Figures 7 is a Q0 RF q lens tune curve before determining the effective r0, in accordance with various embodiments.

Figures 8 is a Q0 RF q lens tune curve after determining the effective r0, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

**DESCRIPTION OF VARIOUS EMBODIMENTS**

Embodiments of systems and methods for ion isolation are described herein and in the accompanying exhibits.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form.

MASS SPECTROMETRY PLATFORMS

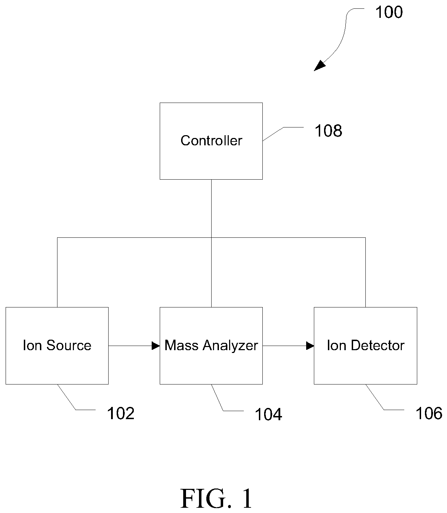

Various embodiments of mass spectrometry platform 100 can include components as displayed in the block diagram of Figure 1. According to various embodiments, mass spectrometer 100 can include an ion source 102, a mass analyzer 104, an ion detector 106, and a controller 108.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the mass analyzer 104 can separate ions based on a mass to charge ratio of the ions. For example, the mass analyzer 104 can include a quadrupole mass filter analyzer, a quadrupole ion trap analyzer, a time-of-flight (TOF) analyzer, an electrostatic trap (e.g., ORBITRAP) mass analyzer, Fourier transform ion cyclotron resonance (FT-ICR) mass analyzer, and the like. In various embodiments, including when mass analyzer 104 is an ion trap, the mass analyzer 104 can also be configured or include an additional device to fragment ions using resonance excitation or collision cell collision induced dissociation (CID), electron transfer dissociation (ETD), electron capture dissociation (ECD), photo induced dissociation (PID), surface induced dissociation (SID), and the like, and further separate the fragmented ions based on the mass-to-charge ratio.

In various embodiments, the ion detector 106 can detect ions. For example, the ion detector 106 can include an electron multiplier, a Faraday cup, and the like. Ions leaving the mass analyzer can be detected by the ion detector. In various embodiments, the ion detector can be quantitative, such that an accurate count of the ions can be determined.

In various embodiments, the controller 108 can communicate with the ion source 102, the mass analyzer 104, and the ion detector 106. For example, the controller 108 can configure the ion source or enable/disable the ion source. Additionally, the controller 108 can configure the mass analyzer 104 to select a particular mass range to detect. Further, the controller 108 can adjust the sensitivity of the ion detector 106, such as by adjusting the gain. Additionally, the controller 108 can adjust the polarity of the ion detector 106 based on the polarity of the ions being detected. For example, the ion detector 106 can be configured to detect positive ions or be configured to detect negative ions.

## DETERMINING EFFECTIVE RO

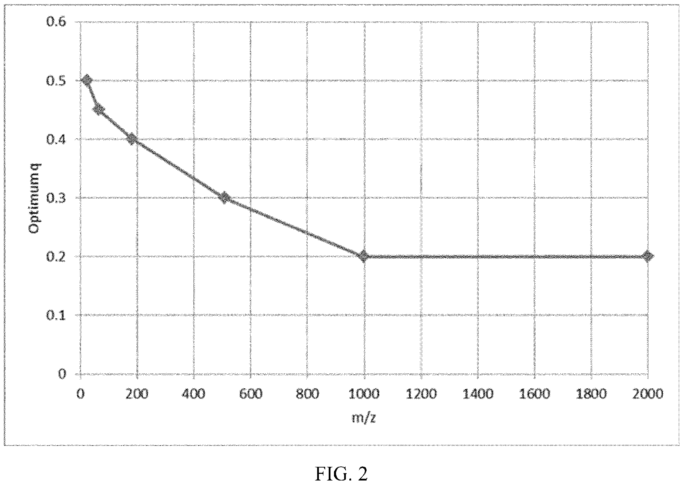

It is known that the optimum q of a multipole ion guide is a function of m/z. Typically, an optimum q is determined for a series of different m/z ions to construct a tune table for an ion guide. The tune table can then be used to determine the RF voltage necessary for the ion guide to pass a particular mass range of ions. Figure 2 shows an exemplary graph of optimal q as a function of mass for an exemplary ion guide. In various embodiments, the ion guide can be a quadrupole, a square quadrupole, a hexapole, an octopole, a stacked ring ion guide, an ion funnel, an ion carpet, any combination thereof, or any other multipole ion guide known in the art.

The tune table can be determined on a particular instrument, but the mass range is limited based on the available calibrant mixture. Additionally, tuning the ion optics can be time consuming. Alternatively, a tune table can be generated for an instrument line and factory installed. The tune table can include the optimal q (or q*m) for a series of masses. The factory installed tune table can be generated using a broader range of calibrant masses and eliminate the need to perform the calibration on each instrument.

However, it has been observed that variations between ion guide assemblies can cause the optimum q to differ between instruments. The cause of the variations can be traced to variations in the mechanical dimensions, specifically $r_0$, between instruments and ion guide assemblies. A method for determining the effective $r_0$ of an ion guide is disclosed. Using the effective $r_0$ rather than a nominal $r_0$, can control for the instrument-to-instrument variations due to differences in mechanical dimensions.

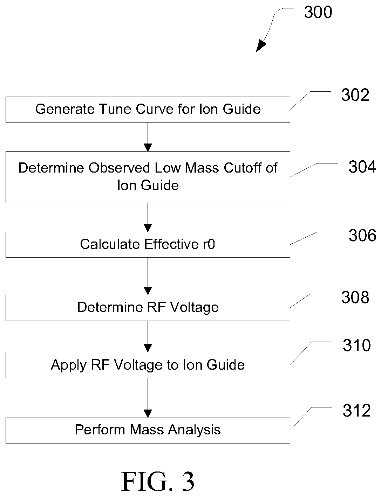

Figure 3 illustrates an exemplary method 300 of calibrating an ion guide for use during a mass analysis. At 302, a tune curve for the ion guide can be generated. In various embodiments, the tune curve can be generated by varying the RF amplitude of the ion guide and measuring the peak area of a calibrant ion as the q of the ion changes with RF amplitude. Data can be generated for a plurality of calibrant ions of different masses.

At 304, an observed low mass cutoff can be determined for the ion guide. The observed low mass cutoff can be the q value at which the ions stop transmitting, such as when the intensity of the calibrant ion drops to near 0, at the high end of the tune curve.

At 306, an effective $r_0$ can be calculated, $r_0$ is the distance from the center axis (the z axis) to the surface of any electrode (rod). Due to variations in the manufacturing of the ion guide, the effective $r_0$ can vary from the nominal $r_0$ to a small degree. This can be due to small variations in the diameter and placement of the rods, or other variations in manufacturing. By calculating the effective $r_0$ for the instrument, corrections for these instrument variations can be compensated for and instrument-to-instrument variability can be reduced.

The effective r0 can be calculated using a ratio of q, q*(m/z), q*(m/z)*$\omega^2$, q*(m/z)*f$^2$, V, V/$\omega^2$, V/f$^2$ or any combination thereof, from Equation 1.

$$\text{Equation 1:} \quad q = \frac{4eV}{(m/z)\omega^2 r_0^2}$$

In various embodiments, K can be defined as one of the values from above, the effective r0 can be calculated using Equation 2.

$$\text{Equation 2:} \quad r0_{effective} = \sqrt{K_{observed} * r0_{nominal}^2 / K_{expected}}$$

where $r0_{nominal}$ is the assumed $r_0$ of the ion guide used in generating the tune curve, $K_{observed}$ is the value observed at a point in the tune curve such as a low mass cutoff, $K_{expected}$ is the value of that point when the tune table was created, and $r0_{effective}$ is the calculated $r_0$ of the ion guide. In various embodiments $r0_{nominal}$ can be the theoretical r0 of the multipole.

In particular embodiments, the effective r0 can be calculated using Equation 3.

$$\text{Equation 3:} \quad r0_{effective} = \sqrt{cutoff_{observed} * r0_{nominal}^2 / cutoff_{expected}}$$

where $r0_{nominal}$ is the assumed $r_0$ of the ion guide used in generating the tune curve, cutoffobserved is the q at the observed low mass cutoff, and $r0_{effective}$ is the calculated $r_0$ of the ion guide. Cutoff$_{expected}$ can be the q value at the expected low mass cutoff. In various embodiments, cutoff$_{expected}$ can be based on theoretical calculations. For example, the cutoff$_{expected}$ for a quadrupole can be a q of 0.908. In other embodiments, the cutoff$_{expected}$ can be the q value at the low mass cutoff when the tune table was created.

In various embodiments, the effective $r_0$ can be determined based on one of the calibrant ion in the calibrant mix. The selected calibrant ion can have a mass near the middle of the mass range covered by the calibrant mix, or at the high or low end of the mass range, or anywhere in between. In other embodiments, the effective r0 can be an average of the effective $r_0$ calculated for two or more calibrant ions within the calibrant mix. In yet another example, the effective r0 can be calculated using an average observed low mass cutoff from two or more calibrant ions within the calibrant mix.

At 308, an RF voltage for the ion guide can be determined based on the effective $r_0$. In various embodiments, RF voltage can depend on the mass range of interest. Additionally, the RF voltage of the ion guide can depend on the RF frequency. In various embodiments, a tune table can be used to determine the RF voltage of the ion guide. The tune table can have optimal q*m values (product of the q and the mass) determined for a number of masses. Using these optimal q*m values and the $r_0$, the RF voltage can be determined for a target mass or target mass range (see Equation 1). At 310, the RF voltage can be applied to the ion guide, and at 312 a mass analysis can be performed.

## COMPUTER-IMPLEMENTED SYSTEM

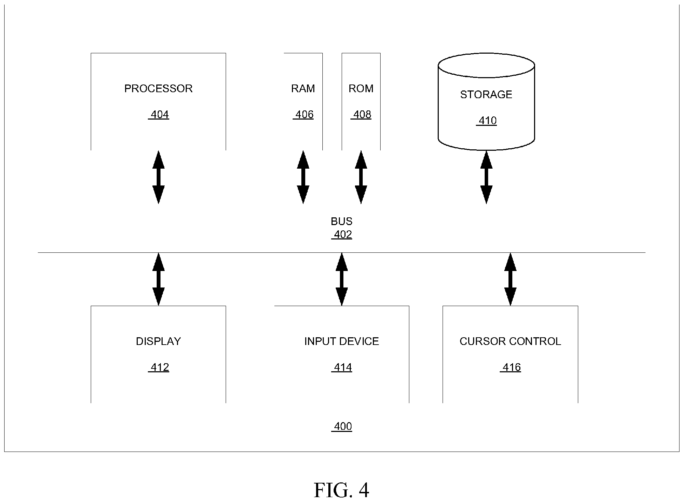

Figure 4 is a block diagram that illustrates a computer system 400, upon which embodiments of the present teachings may be implemented as which may incorporate or communicate with a system controller, for example controller 48 shown in Figure. 1, such that the operation of components of the associated mass spectrometer may be adjusted in accordance with calculations or determinations made by computer system 400. In various embodiments, computer system 400 can include a bus 402 or other communication mechanism for communicating information, and a processor 404 coupled with bus 402 for processing information. In various embodiments, computer system 400 can also include a memory 406, which can be a random access memory (RAM) or other dynamic storage device, coupled to bus 402, and instructions to be executed by processor 404. Memory 406 also can be used for storing temporary variables or other intermediate information during execution of instructions to be executed by processor 404. In various embodiments, computer system 400 can further include a read only memory (ROM) 408 or other static storage device coupled to bus 402 for storing static information and instructions for processor 404. A storage device 410, such as a magnetic disk or optical disk, can be provided and coupled to bus 402 for storing information and instructions.

In various embodiments, computer system 400 can be coupled via bus 402 to a display 412, such as a cathode ray tube (CRT) or liquid crystal display (LCD), for displaying information to a computer user. An input device 414, including alphanumeric and other keys, can be coupled to bus 402 for communicating information and command selections to processor 404. Another type of user input device is a cursor control 416, such as a mouse, a trackball or cursor direction keys for communicating direction information and command selections to processor 404 and for controlling cursor movement on display 412. This input device typically has two degrees of freedom in two axes, a first axis (i.e., x) and a second axis (i.e., y), that allows the device to specify positions in a plane.

A computer system 400 can perform the present teachings. Consistent with certain implementations of the present teachings, results can be provided by computer system 400 in response to processor 404 executing one or more sequences of one or more instructions contained in memory 406. Such instructions can be read into memory 406 from another computer-readable medium, such as storage device 410. Execution of the sequences of instructions contained in memory 406 can cause processor 404 to perform the processes described herein. In various embodiments, instructions in the memory can sequence the use of various combinations of logic gates available within the processor to perform the processes describe herein. Alternatively hard-wired circuitry can be used in place of or in combination with software instructions to implement the present teachings. In various embodiments, the hard-wired circuitry can include the necessary logic gates, operated in the necessary sequence to perform the processes described herein. Thus implementations of the present teachings are not limited to any specific combination of hardware circuitry and software.

The term "computer-readable medium" as used herein refers to any media that participates in providing instructions to processor 404 for execution. Such a medium can take many forms, including but not limited to, non-volatile media, volatile media, and transmission media. Examples of non-volatile media can include, but are not limited to, optical or magnetic disks, such as storage device 410. Examples of volatile media can include, but are not limited to, dynamic memory, such as memory 406. Examples of transmission media can include, but are not limited to, coaxial cables, copper wire, and fiber optics, including the wires that comprise bus 402.

Common forms of non-transitory computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, PROM, and EPROM, a FLASH-EPROM, any other memory chip or cartridge, or any other tangible medium from which a computer can read.

Certain embodiments can also be embodied as computer readable code on a computer readable medium. The computer readable medium is any data storage device that can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion.

In accordance with various embodiments, instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

In various embodiments, the methods of the present teachings may be implemented in a software program and applications written in conventional programming languages and on conventional computer or embedded digital systems.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

The embodiments described herein, can be practiced with other computer system configurations including hand-held devices, microprocessor systems, microprocessor-based or programmable consumer electronics, minicomputers, mainframe computers and the like. The embodiments can also be practiced in distributing computing environments where tasks are performed by remote processing devices that are linked through a network.

It should also be understood that the embodiments described herein can employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations that form part of the embodiments described herein are useful machine operations. The embodiments, described herein, also relate to a device or an apparatus for performing these operations. The systems and methods described herein can be specially constructed for the required purposes or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

## RESULTS

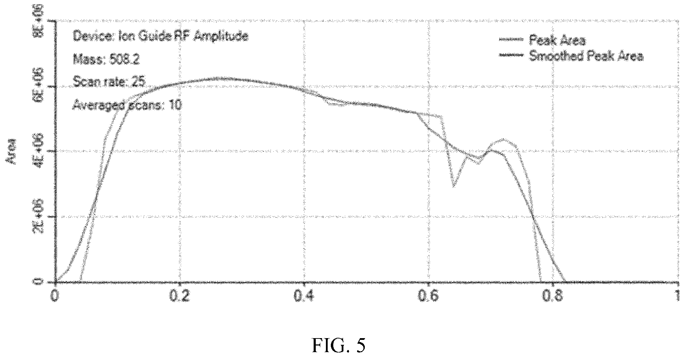

Figure 5 shows an exemplary tune curve of a calibration ion at m/z 508.2 for an exemplary ion guide using a nominal $r_0$ of 2.49 mm. The tune curve is determined by scanning RF voltage to adjust the q value and the peak area of the calibration ion is measured. As can be seen, the low mass cutoff is about q = 0.8, below the expected value of q = 0.908. That is, the assumed q value based on the nominal $r_0$ is low. Using Equation 1 results in an effective r0 of 2.33 mm.

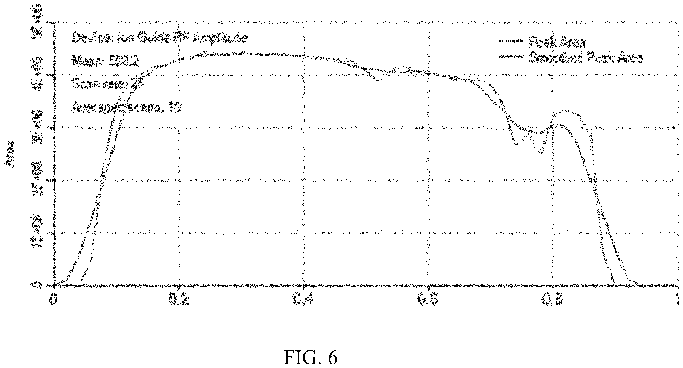

Figure 6 shows an exemplary tune curve of a calibration ion at *m/z* 508.2 using the effective r0 of 2.33 mm. After calculating the effective $r_0$ and adjusting the underlying calculations to set the RF voltage using the effective $r_0$, ions stop transmitting at q = 0.908 as expected.

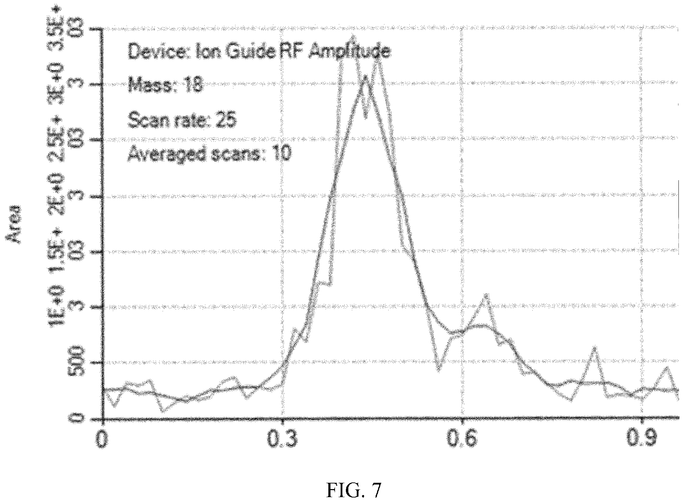

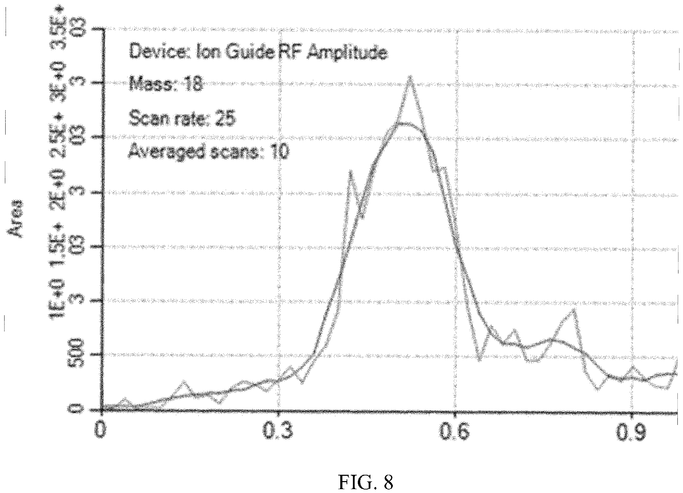

The importance of using the correct $r_0$ can be seen by comparing Figures 7 and 8. Figures 7 and 8 show tune curves for a low mass ion at mass 18. Figure 7 shows the tune curve based on the nominal $r_0$ while Figure 8 shows the tune curve after correcting to the effective $r_0$. Low m/z ions have sharp tuning curves. There is a significant shift in the location of the maximum between Figure 7 and Figure 8. Using a fixed tuning curve with a q of 0.5 would result in half the intensity of the *m/z* 18 ion until the $r_0$ is corrected. A larger difference between the effective $r_0$ and the nominal $r_0$ could result in complete loss of the low mass ions.

**Claims**

1. A mass spectrometry apparatus (100) comprising:

   an ion source (102) configured to generate ions;
   an ion guide (104) configured to guide ions from the ion source (102) towards a detector (106);
   the ion detector (106) configured to detect ions; and
   a mass spectrometry controller (108) configured to:

   generate a tune curve for the ion guide (104) by varying the RF amplitude of the ion guide (104) and measuring the peak area of a calibrant ion as the q of the ion changes with RF amplitude;
   determine an observed low mass cutoff for the ion guide (104) from the tune curve;
   calculate an effective r0 for the ion guide (104) based on the observed low mass cutoff, a nominal r0, and an expected low mass cutoff, wherein $r0_{effective}$ is the calculated $r_0$ of the ion guide (104) and the effective r0 is in accordance with the expression

   $$r0_{effective} = \sqrt{K_{observed} * r0_{nominal}^2 / K_{expected}}$$

   where $r0_{nominal}$ is the assumed $r_0$ of the ion guide (104), $K_{observed}$ is the value for a parameter observed at a point in the tune curve and $K_{expected}$ is the value of that point when the tune table was created, the parameter being selected from q, q*(m/z), q*(m/z)*$\omega^2$, q*(m/z)*f$^2$, V, V/$\omega^2$, V/f$^2$, or a combination thereof;
   determine an RF voltage based on the effective r0;
   apply the RF voltage to the ion guide (104); and
   perform a mass analysis of ions in a sample.

2. The mass spectrometry system (100) of claim 1 wherein the ion guide (104) is a quadrupole, a square quadrupole, a hexapole, an octopole, a stacked ring ion guide, an ion funnel, an ion carpet, or any combination thereof.

3. The mass spectrometry system (100) of claim 1 wherein $K_{observed}$ is the value of q at the observed low mass cutoff and wherein $K_{expected}$ is the value of q at the expected low mass cutoff.

4. The mass spectrometry system (100) of claim 1 wherein the observed low mass cutoff is an average across at least two calibrant ion species.

5. The mass spectrometry system (100) of claim 1 wherein the RF voltage is determined based on the effective r0, the frequency of the RF voltage, and a tune table.

6. The mass spectrometry system (100) of claim 5 wherein the tune table includes optimum q values for mass-to-charge ratios.

7. A method of analyzing ion fragments, comprising:

   generating a tune curve for an ion guide (104) by varying the RF amplitude of the ion guide and measuring the peak area of a calibrant ion as the q of the ion changes with RF amplitude;
   determining an observed low mass cutoff for the ion guide (104) from the tune curve;
   calculating an effective r0 for the ion guide based on the observed low mass cutoff, a nominal r0, and an expected low mass cutoff, wherein the effective r0 is in accordance with

   $$r0_{effective} = \sqrt{K_{observed} * r0_{nominal}^2 / K_{expected}}$$

   where $K_{expected}$ is the expected value for a parameter and $K_{observed}$ is the observed value for the parameter, the parameter selected from q, q*(m/z), q*(m/z)*$\omega^2$, q*(m/z)*f$^2$, V, V/$\omega^2$, V/f$^2$, or a combination thereof;
   determining an RF voltage based on the effective r0;
   applying the RF voltage to the ion guide; and

performing a mass analysis of ions in a sample.

8. The method of claim 7 wherein the ion guide (104) is a quadrupole, a square quadrupole, a hexapole, an octopole, a stacked ring ion guide, an ion funnel, an ion carpet, or any combination thereof.

9. The method of claim 7 wherein $K_{observed}$ is the value of q at the observed low mass cutoff and wherein $K_{expected}$ is the value of q at the expected low mass cutoff.

10. The method of claim 7 wherein the observed low mass cutoff is an average across at least two calibrant ion species.

11. The method of claim 7 wherein the RF voltage is determined based on the effective r0, an RF frequency, and a tune table.

12. The method of claim 11 wherein the tune table includes optimum q values for mass-to-charge ratios.

**Patentansprüche**

1. Massenspektrometer (100), umfassend:

eine Ionenquelle (102), die zum Erzeugen von Ionen konfiguriert ist;
einen Ionenleiter (104), der konfiguriert ist, um Ionen von der Ionenquelle (102) zu einem Detektor (106) zu leiten;
den Ionendetektor (106), der zum Erkennen von Ionen konfiguriert ist; und
eine Massenspektrometrie-Steuerung (108), die für folgende Zwecke konfiguriert ist:

Erzeugen einer Abstimmungskurve für den Ionenleiter (104) durch Variieren der HF-Amplitude des Ionenleiters (104) und Messen der Peakfläche eines kalibrierten Ions, wenn sich das q des Ions mit der HF-Amplitude ändert;
Bestimmen, anhand der Abstimmungskurve, eines beobachteten unteren Massengrenzwertes für den Ionenleiter (104);
Berechnen eines effektiven r0 für den Ionenleiter (104) auf der Grundlage des beobachteten unteren Massengrenzwertes, eines nominalen r0 und eines erwarteten unteren Massengrenzwertes, wobei $r0_{effektiv}$ das berechnete r0 des Ionenleiters (104) ist und das effektive $r_0$ in Übereinstimmung ist mit dem Ausdruck

$$r0_{effektiv} = \sqrt{K_{beobachtet} * r0_{nominal}^2 / K_{erwartet}},$$ *wobei gilt: $r0_{nominal}$ ist das angenommene $r_0$ des* Ionenleiters (104), wobei $K_{beobachtet}$ der Wert für einen Parameter ist, der an einem Punkt in der Abstimmungskurve beobachtet wurde, und $K_{erwartet}$ der Wert dieses Punktes ist, als die Abstimmtabelle erstellt wurde, wobei der Parameter ausgewählt wird aus q, q*(m/z), q*(m/z)*$\omega^2$, q*(m/z)*$f^2$, V, V/$\omega^2$, v/$f^2$ oder einer Kombination davon;
Bestimmen einer HF-Spannung auf der Grundlage des effektiven r0;
Anlegen der HF-Spannung an den Ionenleiter (104);
und Durchführen einer Massenanalyse von Ionen in einer Probe.

2. Massenspektrometer (100) nach Anspruch 1, wobei der Ionenleiter (104) ein Quadrupol, ein quadratischer Quadrupol, ein Hexapol, ein Oktopol, ein gestapelter Ringionenleiter, ein Ionentrichter, ein Ionenteppich oder eine beliebige Kombination davon ist.

3. Massenspektrometer (100) nach Anspruch 1, wobei $K_{beobachtet}$ der Wert von q beim beobachteten unteren Massengrenzwert ist und wobei $K_{erwartet}$ der Wert von q beim erwarteten unteren Massengrenzwert ist.

4. Massenspektrometer (100) nach Anspruch 1, wobei der beobachtete untere Massengrenzwert ein Mittelwert über mindestens zwei kalibrierte Ionenspezies ist.

5. Massenspektrometer (100) nach Anspruch 1, wobei die HF-Spannung auf der Grundlage des effektiven r0, der Frequenz der HF-Spannung und einer Abstimmtabelle bestimmt wird.

**6.** Massenspektrometer (100) nach Anspruch 5, wobei die Abstimmtabelle optimale q-Werte für Masse-Ladungs-Verhältnisse enthält.

**7.** Verfahren zum Analysieren von Ionenfragmenten, Folgendes umfassend:

Erzeugen einer Abstimmungskurve für einen Ionenleiter (104) durch Variieren der HF-Amplitude des Ionenleiters und Messen der Peakfläche eines kalibrierten Ions, wenn sich das q des Ions mit der HF-Amplitude ändert;
Bestimmen, anhand der Abstimmungskurve, eines beobachteten unteren Massengrenzwertes für den Ionenleiter (104);
Berechnen eines effektiven r0 für den Ionenleiter auf der Grundlage des beobachteten unteren Massengrenzwertes, eines nominalen r0 und eines erwarteten unteren Massengrenzwertes, wobei das effektive r0 in Übereinstimmung ist mit

$$r0_{effektiv} = \sqrt{K_{beobachtet} * r0_{nominal}^2 / K_{erwartet}} \, ,$$

*wobei gilt: $K_{erwartet}$ ist* der erwartete Wert für einen Parameter und $K_{beobachtet}$ ist der beobachtete Wert für den Parameter, wobei der Parameter ausgewählt ist aus q, q*(m/z), q*m/z)*$\omega^2$, q*(m/z)*f$^2$, V, V/$\omega^2$, V/f$^2$ oder einer Kombination davon;
Bestimmen einer HF-Spannung auf der Grundlage des effektiven r0;
Anlegen der HF-Spannung an den Ionenleiter; und
Durchführen einer Massenanalyse von Ionen in einer Probe.

**8.** Verfahren nach Anspruch 7, wobei der Ionenleiter (104) ein Quadrupol, ein quadratischer Quadrupol, ein Hexapol, ein Oktopol, ein gestapelter Ringionenleiter, ein Ionentrichter, ein Ionenteppich oder eine beliebige Kombination davon ist.

**9.** Verfahren nach Anspruch 7, wobei $K_{beobachtet}$ der Wert von q beim beobachteten unteren Massengrenzwert ist und wobei $K_{erwartet}$ der Wert von q beim erwarteten unteren Massengrenzwert ist.

**10.** Verfahren nach Anspruch 7, wobei der beobachtete untere Massengrenzwert ein Mittelwert über mindestens zwei kalibrierte Ionenspezies ist.

**11.** Verfahren nach Anspruch 7, wobei die HF-Spannung auf der Grundlage des effektiven r0, einer HF-Frequenz und einer Abstimmtabelle bestimmt wird.

**12.** Verfahren nach Anspruch 11, wobei die Abstimmtabelle optimale q-Werte für Masse-Ladungs-Verhältnisse enthält.

**Revendications**

**1.** Appareil de spectrométrie de masse (100), comprenant :

une source d'ions (102) configurée pour générer des ions ;
un guide d'ions (104) configuré pour guider les ions de la source d'ions (102) vers un détecteur (106) ;
le détecteur d'ions (106) étant configuré pour détecter des ions ; et
un contrôleur de spectrométrie de masse (108) configuré pour :

générer une courbe d'accord pour le guide d'ions (104) en modifiant l'amplitude RF du guide d'ions (104) et en mesurant la zone de crête d'un ion de calibrage à mesure que le q de l'ion change avec l'amplitude RF ;
déterminer un seuil de faible masse observé pour le guide d'ions (104) à partir de la courbe d'accord ;
calculer un r0 effectif pour le guide d'ions (104) sur la base du seuil de faible masse observé, un r0 nominal et un seuil de faible masse attendu, où r0$_{effectif}$ est le r0 calculé du guide d'ions (104) et le r0 effectif est conforme à l'expression

$$r0_{effectif} = \sqrt{K_{observé} * r0_{nominal}^{2}/K_{attendu}}$$

où $r0_{nominal}$ est le $r_0$ supposé du guide d'ions (104), $K_{observé}$ est la valeur d'un paramètre observé à un point de la courbe d'accord et $K_{attendu}$ est la valeur de ce point lorsque le tableau d'accord a été créé, le paramètre étant choisi parmi q, q*(m/z), q*(m/z)*$\omega^2$, q*(m/z)*f$^2$, V, V/$\omega^2$, v/f$^2$, ou une combinaison de ceux-ci ;

déterminer une tension RF sur la base du r0 effectif ;

appliquer la tension RF au guide d'ions (104) ; et

effectuer une analyse de masse des ions dans un échantillon.

2. Système de spectrométrie de masse (100) selon la revendication 1, dans lequel le guide d'ions (104) est un quadripôle, un quadripôle carré, un hexapôle, un octopôle, un guide d'ions à anneau empilé, un entonnoir d'ions, un tapis d'ions ou toute autre combinaison de ceux-ci.

3. Système de spectrométrie de masse (100) selon la revendication 1, dans lequel $K_{observé}$ est la valeur de q au seuil de faible masse observé, et dans lequel $K_{attendu}$ est la valeur de q au seuil de faible masse attendu.

4. Système de spectrométrie de masse (100) selon la revendication 1, dans lequel le seuil de faible masse observé est une moyenne sur au moins deux espèces d'ions de calibrage.

5. Système de spectrométrie de masse (100) selon la revendication 1, dans lequel la tension RF est déterminée sur la base du r0 effectif, de la fréquence de la tension RF et d'un tableau d'accord.

6. Système de spectrométrie de masse (100) selon la revendication 5, dans lequel le tableau d'accord comprend des valeurs q optimales pour les rapports masse/charge.

7. Procédé d'analyse de fragments d'ions, comprenant :

la génération d'une courbe d'accord pour un guide d'ions (104) en modifiant l'amplitude RF du guide d'ions et en mesurant la zone de crête d'un ion de calibrage à mesure que le q de l'ion change avec l'amplitude RF ;

déterminer un seuil de faible masse observé pour le guide d'ions (104) à partir de la courbe d'accord ;

calculer un r0 effectif pour le guide d'ions sur la base du seuil de faible masse observé, un r0 nominal et un seuil de faible masse attendu, le r0 effectif étant conforme à

$$r0_{effectif} = \sqrt{K_{observé} * r0_{nominal}^{2}/K_{attendu}}$$

où $K_{attendu}$ est la valeur attendue pour un paramètre et $K_{observé}$ étant la valeur observée pour le paramètre, le paramètre étant choisi parmi q, q*(m/z), q*(m/z)*$\omega^2$, q*(m/z)*f$^2$, V, V/$\omega^2$, V/f$^2$ ou une combinaison de ceux-ci ;

déterminer une tension RF sur la base du r0 effectif ;

appliquer la tension RF au guide d'ions ; et

effectuer une analyse de masse des ions dans un échantillon.

8. Procédé selon la revendication 7, dans lequel le guide d'ions (104) est un quadripôle, un quadripôle carré, un hexapôle, un octopôle, un guide d'ions à anneau empilé, un entonnoir d'ions, un tapis d'ions ou toute combinaison de ceux-ci.

9. Procédé selon la revendication 7, dans lequel $K_{observé}$ est la valeur de q au seuil de faible masse observé, et dans lequel $K_{attendu}$ est la valeur de q au seuil de faible masse attendu.

10. Procédé selon la revendication 7, dans lequel le seuil de faible masse observé est une moyenne sur au moins deux espèces d'ions de calibrage.

11. Procédé selon la revendication 7, dans lequel la tension RF est déterminée sur la base du r0 effectif, d'une fréquence RF et d'un tableau d'accord.

**12.** Procédé selon la revendication 11, dans lequel le tableau d'accord comprend des valeurs q optimales pour les rapports masse/charge.

100

Controller — 108

Ion Source — 102

Mass Analyzer — 104

Ion Detector — 106

FIG. 1

FIG. 2

300

302

Generate Tune Curve for Ion Guide

304

Determine Observed Low Mass Cutoff of Ion Guide

306

Calculate Effective r0

308

Determine RF Voltage

310

Apply RF Voltage to Ion Guide

312

Perform Mass Analysis

FIG. 3

PROCESSOR

404

RAM

406

ROM

408

STORAGE

410

BUS
402

DISPLAY

412

INPUT DEVICE

414

CURSOR CONTROL

416

400

FIG. 4

FIG. 5

FIG. 6

FIG. 7

FIG. 8

**EP 3 435 404 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10112282 A
- US 2016284527 A